# EUROPEAN PATENT SPECIFICATION

(11) **EP 3 783 078 B1**
(45) Date of publication and mention of the grant of the patent: **09.08.2023**
(21) Application number: 19787970.3
(22) Date of filing: 10.04.2019
(51) Int. Cl.: C09J 125/08, C09J 125/16, C09J 153/02, C09J 11/08, C08F 6/00, C08F 212/08, C08F 212/12

(54) **TACKIFIER AND HOT MELT ADHESIVE COMPOSITION**
KLEBRIGMACHER UND SCHMELZHAFTKLEBERZUSAMMENSETZUNG
AGENT DONNANT DU COLLANT ET COMPOSITION ADHÉSIVE THERMOFUSIBLE

(30) Priority: 18.04.2018 JP 2018080149
(43) Date of publication of application: 24.02.2021
(73) Proprietor: Mitsui Chemicals, Inc., Tokyo 104-0028 (JP)
(72) Inventor: KANAYA, Hirotaka, Chiba 299-0265 (JP); TAKAHASHI, Yosuke, Chiba 299-0265 (JP); MATSUNAGA, Koji, Chiba 299-0265 (JP); KAWABE, Kuniaki, Chiba 299-0265 (JP)
(74) Representative: Hoffmann Eitle
(86) International application number: PCT/JP2019/015698
(87) International publication number: WO 2019/203101

(56) References cited:
- WO-A1-2015/111674
- JP-A- H09 286 964
- JP-A- 2007 131 706
- JP-A- 2010 536 957
- JP-A- 2011 162 747
- JP-A- 2012 012 437
- JP-A- 2016 065 157
- US-A1- 2014 213 716

## Description

### Technical Field

The present invention relates to a tackifier and a hot melt adhesive composition. More particularly, the present invention relates to a tackifier that imparts an excellent tackiness to base polymer, and a hot melt adhesive composition that maintains suitable adhesion, particularly excellent adhesion at high temperatures and achieves low odor with the tackifier added thereto.

### Background Art

As an adhesive that is applied to sanitary materials such as napkins and disposable diapers and heated to exert an adhesive effect, the following is well known: a hot melt adhesive including a styrene block copolymer such as SIS, SBS, SEBS or SEPS as a base and a tackifying resin added thereto. The tackifying resin of such a hot melt adhesive typically contains any of a variety of hydrogenated petroleum resins having little coloring and styrene-based resins.

Unfortunately, adding a hydrogenated petroleum resin used in this type of application to a hot-melt adhesive lowers adhesivity (cohesive force), although tackiness is increased. Even with styrene-based resins having good adhesivity used in recent years, there is still a demand for hot melt adhesives with even better heat resistance.

Patent Literature (hereinafter, referred to as "PTL") 1 proposes an aliphatic petroleum resin having a specific dispersion as a tackifier having excellent heat resistance. In addition, PTL 2 proposes a styrene-based resin with at least a part thereof hydrogenated, and PTL 3 proposes a styrene-based resin derived from a monomer having a large steric hindrance, such as α-methylstyrene or isopropenyltoluene.

Furthermore, US 2014/213716 A1 is concerned with a pressure sensitive adhesive composition comprising a base polymer and a tackifier resin. The base polymer is a block copolymer of a monovinyl-substituted aromatic compound and a conjugated diene compound. The tackifier resin comprises a tackifier resin, which has a softening point of 120° C or more and includes a tackifier resin having an aromatic ring and a hydroxyl value of 30 mgKOH/g or less.

### Citation List

### Patent Literature

PTL 1
   Japanese Patent No. 4054084
PTL 2 Japanese Patent No. 6189864
PTL 3
   Japanese Patent No. 4791151

### Summary of Invention

### Technical Problem

The resins of PTLs 1 and 2 inevitably have a decrease in the softening point caused by a monomer having little steric hindrance, and thus excellent heat resistance cannot be expected. Although PTL 3 proposes a styrene-based resin derived from a monomer having a large steric hindrance, and also discloses an adhesive composition excellent in heat resistance that contains tackifier having a relatively high softening point, there is a demand for further improvement in adhesiveness and high temperature adhesiveness.

An object of the present invention is to provide a tackifier (B) capable of exhibiting excellent adhesivity, high temperature adhesiveness and heat resistance, and a hot melt adhesive composition using the same.

### Solution to Problem

The present inventors have studied the above object and have found that the object is achieved by a tackifier containing a specific copolymer, thereby completing the present invention.
[1] A tackifier (B) containing a copolymer (C) that contains a structural unit derived from α-methylstyrene or isopropenyltoluene, and a structural unit derived from styrene, in which the copolymer (C) satisfies requirements (i) to (iii) below:
   (i) the content of the structural unit derived from α-methylstyrene or isopropenyltoluene is in the range of 30 to 70 mol%;
   (ii) the softening point (Tm) measured by a ring and ball method and in accordance with JIS K 2207 is in the range of 110 to 170°C; and
   (iii) the content of a low molecular weight substance having a molecular weight of 350 or less in terms of polystyrene is less than 1.5% by mass, the molecular weight being measured by gel permeation chromatography (GPC).
[2] The tackifier (B) according to [1], in which the copolymer (C) further satisfies a requirement (iv) below:
   (iv) the weight average molecular weight (Mw) measured by the gel permeation chromatography (GPC) is in the range of 1,000 to 5,000, and the dispersion (Mw/Mn) is 1.9 or less, the dispersion being the ratio of the weight average molecular weight (Mw) to the number average molecular weight (Mn).
[3] A hot melt adhesive composition containing 100 parts by mass of a base polymer (A) and 10 to 300 parts by mass of the tackifier (B) according to [1] or [2].
[4] The hot melt adhesive composition according to [3], in which the base polymer (A) is a copolymer and/or a hydrogenated product thereof, the copolymer containing a structural unit derived from a vinyl aromatic compound and a structural unit derived from a conjugated diene compound.

### Advantageous Effects of Invention

Adding a tackifier of the present invention to a base polymer allows the expression of excellent high temperature adhesiveness as compared with the other styrene-based polymers alone or copolymers at the same softening point while suitable adhesion is maintained.

### Description of Embodiments

As described above, the present inventors have aimed to further enhance the adhesivity and high temperature adhesiveness of a resulting adhesive composition with the use of a tackifier having a relatively high softening point.

The study by the present inventors reveals that the melt viscosity of a resin contained in the tackifier may affect the adhesive strength of the resulting hot melt adhesive composition. Specifically, it is found that the higher the melt viscosity of the resin contained in the tackifier is, the higher the adhesive strength of the resulting hot melt adhesive composition becomes.

The present inventors have found that using a tackifier containing a specific copolymer (C), particularly a copolymer (C) containing a low molecular weight substance having a molecular weight of 350 or less at a content adjusted to a certain value or less, can suitably enhance the melt viscosity of the resin contained in the tackifier (within a range not significantly impairing flowability at the time of coating of the hot melt adhesive composition), and further enhance the adhesivity and high temperature adhesiveness of the resulting hot melt adhesive composition.

It is possible to not excessively increase the melt viscosity of the resin contained in the tackifier (flowability at the time of coating of the hot melt adhesive composition) by, for example, setting the weight average molecular weight (Mw) of the resin contained in the tackifier to a certain level or less. Hereinafter, the present invention will be described in detail.

### 1. Tackifier (B)

The tackifier (B) contains a copolymer (C).

### <Copolymer (C)>

The copolymer (C) contained in the tackifier (B) contains a structural unit derived from α-methylstyrene or isopropenyltoluene and a structural unit derived from styrene, and satisfies the requirements (i) to (iii) below.

### [Requirement (i)]

The content of the structural unit derived from α-methylstyrene or isopropenyltoluene is in the range of 30 to 70 mol%. The content is in the range of preferably 35 to 65 mol%, more preferably 40 to 60 mol%. Setting the content of the structural unit derived from α-methylstyrene or isopropenyltoluene to fall within this range allows the resulting hot melt adhesive composition to have excellent adhesive strength and excellent high temperature adhesiveness.

The content of structural unit derived from styrene is in the range of preferably 30 to 70 mol%, more preferably 35 to 65 mol%, and even more preferably 40 to 60 mol%.

The content (mass ratio) of a structural unit can be measured by analysis of ¹³C-NMR spectrum. Measurement conditions may be the same as in the Examples described below.

### [Requirement (ii)]

The softening point (Tm) of a copolymer (C) (softening point measured by the ring and ball method defined in JIS K 2207) is from 110 to 170°C, preferably from 120 to 160°C, more preferably from 130 to 150°C. Setting the softening point to fall within this range allows the resulting hot melt adhesive composition to have excellent adhesive strength and excellent high temperature adhesiveness.

The softening point (Tm) can be adjusted with, for example, weight average molecular weight (Mw) measured by GPC, the content of a low molecular weight substance having a molecular weight of 350 or less, or the type and composition of monomers. The softening point (Tm) may be increased by, for example and preferably, increasing the weight average molecular weight (Mw) measured by GPC, reducing the content of the low molecular weight substance having a molecular weight of 350 or less, or increasing the content of the structural unit derived from α-methylstyrene or isopropenyltoluen.

### [Requirement (iii)]

The content of a low molecular weight substance, which has a molecular weight of 350 or less, of the copolymer (C) in terms of polystyrene measured by gel permeation chromatography (GPC) is less than 1.5% by mass, preferably less than 1.0% by mass, and more preferably less than 0.9% by mass. Setting the content of a low molecular weight substance having a molecular weight of 350 or less to fall within this range allows the resulting hot melt adhesive composition to have excellent adhesive strength and excellent high temperature adhesiveness with respect to the softening point of the copolymer (C). In other word, adhesive strength and high temperature adhesiveness of the resulting hot melt adhesive composition become excellent with respect to the melt viscosity of the copolymer (C). In addition, due to the reduced amount of monomers, dimers and trimers having a particular odor, discomfort during the usage of sanitary materials such as napkins, disposable diapers and the like can also be reduced.

The content of the low molecular weight substance having a molecular weight of 350 or less can be measured by calculating with the integration of the area of a region between a curve of a molecular weight of 350 or less and a baseline in an integral molecular weight distribution curve measured in terms of polystyrene by gel permeation chromatography (GPC) method using tetrahydrofuran as a solvent for copolymer (C).

The content of the low molecular weight substance having a molecular weight of 350 or less can be adjusted, for example, by a concentration step (step 2 described below) in a production process of the copolymer (C). Further lowering of the pressure in the concentration step, for example, is preferable for reducing the content of the low molecular weight substance having a molecular weight of 350 or less.

### [Requirement (iv)]

The weight average molecular weight (Mw) of the copolymer (C) is preferably from 1,000 to 5,000, preferably from 1,500 to 4,000, more preferably from 2,000 to 3,000. Setting the weight average molecular weight (Mw) to fall within this range allows the hot melt adhesive composition to have high flowability at the time of coating to achieve easy handling.

The dispersion (Mw/Mn), a ratio of the weight average molecular weight (Mw) to number average molecular weight (Mn), is preferably 1.9 or less, more preferably 1.85 or less, and still more preferably 1.8 or less. Setting the dispersion (Mw/Mn) to 1.9 or less is more likely to allow the flowability of the resulting tackifier (B) to increase, thereby increasing the flowability at the time of coating of the hot melt adhesive composition. The weight average molecular weight (Mw) and the dispersion (Mw/Mn) can be measured in terms of polystyrene by the GPC method using tetrahydrofuran as the solvent for a copolymer (C). The dispersion (Mw/Mn) can be adjusted, for example, by selection of a catalyst used for polymerization of a copolymer (C') serving as a raw material, and concentration conditions.

### [Requirement (v)]

The melt viscosity of the copolymer (C) at 200°C is preferably 200 to 10,000 mPa s, more preferably 500 to 5,000 mPa·s. Setting the melt viscosity to fall within this range allows the hot melt adhesive composition to have adhesiveness and high temperature adhesiveness at high levels without impairing flowability at the time of coating. The melt viscosity can be measured at 60 rpm at 200°C using Brookfield viscometer.

The melt viscosity can be adjusted, for example, by the monomer composition of the copolymer (C) or the content of the low molecular weight substance. It is preferable to, for example, reduce the content of the low molecular weight substance to appropriately increase the melt viscosity.

### <Method for producing a copolymer (C)>

A copolymer (C) can be produced, for example, by a manufacturing method including the steps below. The method for producing a copolymer (C) includes, for example, at least step 1 of obtaining a copolymer (C') serving as a raw material, and step 2 of concentrating the copolymer (C') to obtain a copolymer (C). A copolymer (C') satisfying the above requirement (iii) can omit step 2.

### [Step 1: Synthesizing copolymer (C') serving as raw material]

Step 1 produces a copolymer (C') serving as a raw material of a copolymer (C). Polymerization of a monomer in the presence of a catalyst can obtain the copolymer (C').

Examples of the catalyst used in the polymerization include those generally known as Friedel Crafts catalysts, for example, various complexes such as aluminum chloride, aluminum bromide, dichloromonoethyl aluminum, titanium tetrachloride, tin tetrachloride and boron trifluoride. The amount of catalyst to be used is from 0.01 to 5% by mass, preferably from 0.05 to 3% by mass, based on the total amount of monomers.

Further, it is preferable to carry out the polymerization reaction in at least one hydrocarbon solvent selected from the group consisting of aromatic hydrocarbons, aliphatic hydrocarbons and alicyclic hydrocarbons in order to remove reaction heat and suppress the increase in viscosity of the reaction mixture during the polymerization reaction. Examples of preferred hydrocarbon solvents include aromatic hydrocarbons such as toluene, xylene, ethylbenzene, mesitylene, cumene and cymene, or mixtures thereof; and mixtures of any of the aromatic hydrocarbons with aliphatic hydrocarbons such as pentane, hexane, heptane and octane and/or alicyclic hydrocarbons such as cyclopentane, cyclohexane and methylcyclohexane. The amount of the reaction solvents to be used is preferably an amount such that the initial concentration of the monomer in the reaction mixture becomes 10 to 80% by mass.

The polymerization temperature can be appropriately selected depending on the type and amount of the monomer or catalyst to be used, and is typically from -30 to +50°C. The polymerization is generally carried out for about 0.5 to 5 hours, and is usually almost completed in 1 to 2 hours. The polymerization may adopt as its mode either a batch system or a continuous system. Multistage polymerization may also be carried out.

Washing the resultant to remove the catalyst residue is preferred after completion of the polymerization. As the washing liquid, it is preferable to use an alkaline aqueous solution having potassium hydroxide, sodium hydroxide or the like dissolved therein, or an alcohol such as methanol. Washing demineralization with the use of methanol is particularly preferred. After completion of the washing, the unreacted monomer, the polymerization solvent and the like may be distilled off under reduced pressure to obtain copolymer (C') as a raw material.

### [Step 2: step of obtaining copolymer (C) from copolymer (C')]

When the copolymer (C') obtained in step 1 does not satisfy the above requirement (iii), that is, the content of a low molecular weight substance having a molecular weight of 350 or less in terms of polystyrene measured by gel permeation chromatography (GPC) is less than 1.5% by mass, step 2 described below may further be carried out to obtain a copolymer (C) satisfying the requirement (iii).

Specific examples of step 2 include a concentration method using a difference in vapor pressure for each substance, such as atmospheric distillation, reduced-pressure distillation and steam distillation, and a concentration method using a difference in affinity for a filler such as silica gel and in molecular size, such as an open column or a flash column. The reduced-pressure distillation method is preferred from the viewpoint of suppressing thermal decomposition of the copolymer (C') and increasing concentration efficiency.

The reduced-pressure distillation method may be carried out at any level of reduced pressure as long as the method can adjust the content of a low molecular weight substance in the copolymer (C) to fall within the above range. The pressure is preferably 5 to 80Pa, more preferably 10 to 60Pa. Further, the heating temperature is preferably 250°C or less, more preferably 230°C or less, and still more preferably 210°C or less to suppress the thermal decomposition of the copolymer (C').

### <Other components>

A tackifier (B) may be composed solely of copolymer (C), but may further contain other components in addition to the copolymer (C) as necessary. As one of the other components other than the copolymer (C), an oligomer that is a material capable of imparting flowability at the time of melting, generally has a molecular weight of several hundred to several thousand and a softening point of about 60 to 160°C is typically used.

Specific examples of such oligomers include natural rosin, modified rosin, polyterpene-based resins, synthetic petroleum resins, coumarone-based resins, phenolic resins, xylene-based resins, styrene-based resins other than the copolymer (C), and isoprene-based resins. More specific examples include aliphatic hydrocarbon resins starting mainly from C4 fractions and C5 fractions obtained by cracking petroleum, naphtha and the like, mixtures thereof, or any component contained in the fractions (e.g., isoprene and 1,3-pentadiene in the C5 fractions); aromatic hydrocarbon resins starting mainly from styrene derivatives and indenes contained in C9 fractions obtained by cracking of petroleum, naphtha and the like; aliphatic/aromatic copolymer hydrocarbon resins obtained by copolymerizing any component contained in the C4 fractions and the C5 fractions with any component contained in the C9 fractions; alicyclic hydrocarbon resin obtained by hydrogenating aromatic hydrocarbon resins; synthetic terpene-based hydrocarbon resins containing aliphatic, alicyclic and aromatic hydrocarbon resins; terpene-based hydrocarbon resins starting from α,β-pinene in turpentine oil; coumarone indene-based hydrocarbon resins starting from indene and styrenes in coal tar naphtha; low molecular weight styrene-based resins; and rosin-based hydrocarbon resins. Alternatively, the oligomer may be obtained by copolymerizing a plurality of monomers selected from terpene-based monomers, coumarone-based monomers, styrene-based monomers and phenol-based monomers as disclosed in Japanese Patent Application Laid-Open No. 2005-194488.

The content of the copolymer (C) in a tackifier (B) is usually 80% by mass or more, preferably 90% by mass or more.

### 2. Hot melt adhesive composition

The hot melt adhesive composition of the present invention contains a base polymer (A) and the above tackifier (B).

### <Base polymer (A)>

A base polymer (A) used in the hot melt adhesive composition of the present invention may be a copolymer, which is commonly used in hot melt adhesives, containing a structural unit derived from a vinyl aromatic compound and a structural unit derived from a conjugated diene compound, or a hydrogenated product of the copolymer.

Examples of the vinyl aromatic compound include styrene, α-methylstyrene, 1-vinylnaphthalene, 2-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, monochlorostyrene, dichlorostyrene, methoxystyrene, indene and acenaphthylene. Styrene and α-methylstyrene are preferred.

The conjugated diene compound preferably has 4 to 20 carbon atoms, and examples thereof include butadiene, isoprene, and hexadiene. Butadiene and isoprene are preferred.

Examples of the copolymer containing a structural unit derived from a vinyl aromatic compound and a structural unit derived from a conjugated diene compound, and the hydrogenated product thereof include styrene-butadiene random copolymer, styrene-isoprene random copolymer, butadiene-polystyrene block copolymer, polystyrene-polyisoprene block copolymer, polystyrene-polyisoprene-polystyrene triblock copolymer (SIS), polystyrene-polybutadiene-polystyrene triblock copolymer (SBS), poly(α-methylstyrene)-polybutadiene-poly(α-methylstyrene) triblock copolymer, and hydrogenated products thereof such as hydrogenated products (SEBS) of polystyrene-polybutadiene-polystyrene triblock copolymer (SBS), and hydrogenated products (SEPS) of polystyrene-polyisoprene-polystyrene triblock copolymer (SIS). The styrene block polymer is preferably a non-hydrogenated product of a copolymer composed of a vinyl aromatic compound and a conjugated diene compound. These polymers and the hydrogenated products thereof may be obtained as commercial products. Examples of the commercial products include products marketed under the following trade names: Cariflex TR-1101, TR-1107 and TR-4113 (manufactured by Kraton Corporation), Kraton G-6500, G-6521, G-1650, G-1652, G-1657, D-1117 and D-1165 (manufactured by Kraton Corporation), and Solprene and hydrogenated Solprene (manufactured by Phillips). A block copolymer containing a block mainly composed of a structural unit derived from a vinyl aromatic compound and a block mainly composed of a structural unit derived from a conjugated diene compound is preferred. A styrene-isoprene-styrene ternary block copolymer, a styrene-isoprene binary block copolymer, or a mixture thereof is more preferred from the viewpoint of suppressing the increase of viscosity during processing and having excellent processability.

The content of the structural unit derived from the vinyl aromatic compound is preferably 10 to 50 mol%, and the content of the structural unit derived from the conjugated diene compound is preferably 50 to 90 mol%.

The base polymer (A) may be used alone or in combination.

The hot melt adhesive composition of the present invention contains the base polymer (A) and the tackifier (B) in a ratio of 10 to 300 parts by mass of the tackifier (B) relative to 100 parts by mass of the base polymer (A). The ratio is preferably in the range of 50 to 250 parts by mass of the tackifier (B) relative to 100 parts by mass of the base polymer (A) from the view point of the base polymer (A) and tackifier (B) acting in a well-balanced manner, and not excessively impairing flowability while maintaining suitable adhesiveness.

### <Other components>

The hot melt adhesive composition of the present invention may further contain, in addition to the base polymer (A) and the tackifier (B), other components such as various wax, softeners, stabilizers, fillers, antioxidants and the like, as necessary, within a range not impairing the object of the present invention.

Any wax used in hot melt adhesives may be used, and specific examples of the wax include synthetic wax such as low molecular weight polyethylene wax, petroleum-based wax such as paraffin wax and microcrystallin wax, and Fisher-Tropsch wax. A low molecular weight polyethylene wax polymerized with a Ziegler catalyst or a metallocene catalyst is preferred.

Examples of the softener include naphthenic oils, paraffinic oils and aromatic oils. A naphthenic oil or a paraffinic oil is preferred from the viewpoint of retaining the cohesive force.

The total content of components other than the base polymer (A) and the tackifier (B) may be, for example, 10% by mass or less based on the hot melt adhesive composition.

The hot melt adhesive composition of the present invention may be prepared by supplying the above base polymer (A), the tackifier (B), and, as necessary, ay of the above various components to a mixer such as Brabender at a predetermined mixing ratio, heating the mixture to melt and mix, and forming the mixture into a desired shape, for example, granular, flaky, rod-like or the like.

### <Applications>

Heating and melting of the hot melt adhesive composition of the present invention forms a hot melt adhesive layer for use by applying the melted hot melt adhesive composition using a common method on base materials such as non-woven fabric, kraft paper, aluminum foil and a polyester film. The thickness of the hot melt adhesive layer may be, for example, about 5 to 100 µm, depending on the application. The obtained products may be used for various applications, for example, for sanitary material supplies such as disposable diapers and napkins, office supplies such as adhesive tapes and labels, and metal foil tapes.

### [Examples]

The methods for measuring the physical properties of the copolymers in the Examples and Comparative Examples are as described below. The measurement results are shown in Table 1.

### [Content of structural unit]

The content (mass-ratio) of a structural unit was determined by the analysis of ¹³C-NMR spectrum measured under the following conditions.

### <Measuring conditions of ¹³C-NMR>

Apparatus: AVANCEIII cryo-500 type nuclear magnetic resonance apparatus, manufactured by Bruker Biospin Inc.
Measured nucleus: ¹³C (125MHz)
Measurement mode: Single-pulse proton broadband decoupling
Pulse width: 45° (5.00 µ/sec)
Number of points: 64k
Measurement range :250 ppm (-55 to 195 ppm)
Repetition time: 5.5 seconds
Accumulated count: 128 times
Measuring solvent: orthodichlorobenzene/benzene-d6 (4/1 (volume ratio))
Sample concentration: 60 mg/0.6mL
Measurement temperature: 120°C
Window function: exponential (BF: 1.0Hz)
Chemical shift standard: δδ signal 29.73 ppm

### [Softening point (Tm)]

The softening point was measured by the ring and ball method defined in JIS K 2207.

### [Content of low molecular weight substance having molecular weight of 350 or less, Mw and Mw/Mn]

The weight average molecular weight (Mw) and the dispersion (Mw/Mn) were measured by the GPC method (in terms of polystyrene) using tetrahydrofuran as a solvent. The content of a low molecular weight substance having a molecular weight of 350 or less was calculated by integrating the area of a region between a curve of a molecular weight of 350 or less and a baseline in an integral molecular weight distribution curve obtained by the GPC measurement.

### [Melt viscosity]

The melt viscosity was measured at a rotational speed of 60 rpm and at 200°C using a Brookfield-type viscometer.

### [Volatile content]

In an aluminum cup having an actual capacity of 10 ml, 2.5g of a tackifier (B) was placed and allowed to stand for 1 hour in an air oven heated to 150°C to measure the change in mass from before to after the standing.

### [Synthesis Example 1] Production of styrene-α-methylstyrene copolymer (C1')

To an autoclave having an actual capacity of 1,270 ml and equipped with a stirring blade, a mixture of styrene, α-methylstyrene, and dehydrated and purified toluene (volume ratio: total of monomers/toluene = 1/1), and a boron trifloride phenolate complex (1.7 times equivalent of phenol) diluted 10 times with dehydrated and purified toluene were continuously supplied and subjected to a polymerization reaction at the reaction temperature of 5°C. The molar ratio of styrene to α-methylstyrene was 60/40, and the feed rate of the mixture of the monomers and toluene was 1.0 liter/hour, and the feed rate of the diluted catalyst was 90 milliliters/hour. This reaction mixture was then transferred to the second-stage autoclave to continue the polymerization reaction at 5°C. When the total residence time in the first-stage and second-stage autoclaves reached 2 hours, the reaction mixture was started to be continuously discharged, and one liter of the reaction mixture was collected when the total residence time became 3 times, and the polymerization reaction was terminated. After completion of the polymerization, 1N NaOH aqueous solution was added to the collected reaction mixture to demineralize the catalyst residue. Thus obtained reaction mixture was washed with a large amount of water 5 times, and the solvent and unreacted monomers were distilled off under reduced pressure with an evaporator to obtain a styrene-α-methylstyrene copolymer (C1').

### [Synthesis Example 2] Production of styrene-α-methylstyrene copolymer (C2')

Styrene-α-methylstyrene copolymer (C2') was obtained in the same manner as in Synthesis Example 1, except that the feed rate of the catalyst was 108 milliliters/hour.

### [Synthesis Example 3] Production of styrene-α-methylstyrene copolymer (C3')

Styrene-α-methylstyrene copolymer (C3') was obtained in the same manner as in Synthesis Example 1, except that the feed rate of the catalyst was 83 milliliters/hour.

### 1. Preparation of tackifier

### [Example 1]

In a glass container attached to the upper portion of a thin film evaporator (WIPRENE type 2-03, manufactured by Kobelco Eco-solutions Co., LTD.), 500 ml of the styrene-α-methylstyrene copolymer (C1') obtained in Synthesis Example 1 was placed and then heated to 200°C. The styrene-α-methylstyrene copolymer (C1') was supplied to the main body heated to 200°C at the rate of 5g/min, and concentrated at a rotational speed of 450 rpm and a vacuum degree of 50 Pa, and the obtained tackifier, a styrene-α-methylstyrene copolymer (C1a), was thus collected in a glass eggplant-shaped flask attached to the lower portion of the evaporator.

### [Example 2]

A styrene-α-methylstyrene copolymer (C1b) was obtained in the same manner as in Example 1, except that the styrene-α-methylstyrene copolymer (C1') obtained in Synthesis Example 1 was concentrated at a vacuum degree of 20 Pa.

### [Comparative Example 1]

The styrene-α-methylstyrene copolymer (C1') obtained in Synthesis Example 1 was used as it was without being concentrated.

### [Comparative Example 2]

A styrene-α-methylstyrene copolymer (c1) was obtained in the same manner as in Example 1, except that the styrene-α-methylstyrene copolymer (C1') obtained in Synthesis Example 1 was concentrated at a vacuum degree of 100 Pa.

### [Example 3]

A styrene-α-methylstyrene copolymer (C2a) was obtained in the same manner as in Example 1, except that the styrene-α-methylstyrene copolymer (C2') obtained in Synthesis Example 2 was concentrated at a vacuum degree of 50 Pa.

### [Example 4]

A styrene-α-methylstyrene copolymer (C2b) was obtained in the same manner as in Example 1, except that the styrene-α-methylstyrene copolymer (C2') obtained in Synthesis Example 2 was concentrated at a vacuum degree of 20 Pa.

### [Comparative Example 3]

The styrene-α-methylstyrene copolymer (C2') obtained in Synthesis Example 2 was used as it was without being concentrated.

### [Comparative Example 4]

A styrene-α-methylstyrene copolymer (c2) was obtained in the same manner as in Example 1, except that the styrene-α-methylstyrene copolymer (C2') obtained in Synthesis Example 2 was concentrated at a vacuum degree of 100 Pa.

### [Example 9]

A styrene-α-methylstyrene copolymer (C3a) was obtained in the same manner as in Example 1, except that the styrene-α-methylstyrene copolymer (C3') obtained in Synthesis Example 3 was concentrated at a vacuum degree of 50 Pa.

### [Example 10]

A styrene-α-methylstyrene copolymer (C3b) was obtained in the same manner as in Example 1, except that the styrene-α-methylstyrene copolymer (C3') obtained in Synthesis Example 3 was concentrated at a vacuum degree of 20 Pa.

### [Comparative Example 9]

The styrene-α-methylstyrene copolymer (C3') obtained in Synthesis Example 3 was used as it was without being concentrated.

### [Comparative Example 10]

A styrene-α-methylstyrene copolymer (c3) was obtained in the same manner as in Example 1, except that the styrene-α-methylstyrene copolymer (C3') obtained in Synthesis Example 3 was concentrated at a vacuum degree of 100 Pa.

### 2. Fabrication and evaluation of hot melt adhesive composition

### [Examples 5 to 8, 11 and 12, Comparative Examples 5 to 8, 11 and 12]

Prepared as a base polymer (A) was a mixture of styrene-isoprene-styrene ternary block copolymer and styrene-isoprene binary block copolymer (Kraton D1165, manufactured by Kraton Corporaton, content of structural unit derived from styrene: 30 mol%). To 100 parts by mass of the mixture, 200 parts by mass of each styrene-α-methylstyrene copolymer shown in Table 1 was added as a tackifier, kneaded with Labo Plastomill at 180°C for 15 minutes to produce a hot melt adhesive composition.

The adhesiveness and odor of the obtained hot melt adhesive compositions were evaluated in the following manner.

### <Adhesiveness>

The obtained hot melt adhesive composition was coated on two aluminum foils (50 µm) to a thickness of 25 µm to form hot melt adhesive layers. These hot melt adhesive layers were stuck together, heat-sealed under the conditions of upper bar at 120°C, lower bar at 120°C, 3 kg/cm² and heating for 10 seconds, and further cut into a width of 25 mm to prepare adhered samples. This adhered samples were individually subjected to a T-type peeling test at measurement temperatures of 20°C, 50°C and 80°C to measure the adhesive strength (pulling rate: 300 mm/min).

### <Odor>

The obtained hot melt adhesive composition was placed in a test tube and sealed, and heated at 150° C for 30 minutes to measure the odor after the heating with the use of Odor level indicator XP-329III type (manufactured by New Cosmos Electric Co., Ltd.). The larger the measured value, the stronger the odor is evaluated.

**[Table 1]**

| | | | Unit | Comp. Ex. 5 | Comp. Ex. 6 | Ex. 5 | Ex. 6 | Comp. Ex. 7 | Comp. Ex. 8 | Ex. 7 | Ex. 8 | Comp. Ex. 11 | Comp. Ex. 12 | Ex. 11 | Ex. 12 |
|---|---|---|---|---|---|---|---|---|---|---|---|---|---|---|---|
| Copolymer | Type | | - | Comp. Ex. 1 | Comp. Ex. 2 | Ex. 1 | Ex. 2 | Comp. Ex. 3 | Comp. Ex. 4 | Ex. 3 | Ex. 4 | Comp. Ex. 9 | Comp Ex. 10 | Ex. 9 | Ex. 10 |
| | | | | C1' | c1 | C1a | C1b | C2' | c2 | C2a | C2b | C3' | c3 | C3a | C3b |
| | Manufacturing method | Raw material | | C1' | C1' | C1' | C1' | C2' | C2' | C2' | C2' | C3' | C3' | C3' | C3' |
| | | Concentration condition (Vacuum degree) | Pa | None | 100 | 50 | 20 | None | 100 | 50 | 20 | None | 100 | 50 | 20 |
| | Composition | Structural unit derived from α-methylstyrene | mol% | 41 | 41 | 41 | 41 | 41 | 41 | 41 | 41 | 40 | 40 | 40 | 40 |
| | | Structural unit derived from styrene | mol% | 59 | 59 | 59 | 59 | 59 | 59 | 59 | 59 | 60 | 60 | 60 | 60 |
| | Physical property | Softening point | °C | 121 | 128 | 133 | 133 | 138 | 145 | 147 | 146 | 106 | 115 | 120 | 124 |
| | | Melt viscosity at 200°C | mPas | 450 | 710 | 990 | 920 | 2,100 | 3,950 | 4,450 | 4,250 | 150 | 460 | 560 | 620 |
| | | Mw | - | 2,440 | 2,520 | 2,580 | 2,580 | 3,600 | 3,690 | 3,650 | 3,700 | 2,010 | 2,090 | 2,120 | 2,190 |
| | | Mn | - | 1,180 | 1,330 | 1,470 | 1,520 | 1,670 | 1,860 | 1,920 | 2,070 | 980 | 1,100 | 1,340 | 1,460 |
| | | Mw/Mn | - | 2.07 | 1.90 | 1.76 | 1.70 | 2.25 | 1.98 | 1.90 | 1.79 | 2.07 | 1.90 | 1.58 | 1.50 |
| | | Content of low molecular weight substance having molecular weight of 350 or less | % by mass | 5.92 | 2.87 | 0.52 | 0.47 | 3.04 | 1.64 | 0.89 | 0.72 | 11.25 | 6.18 | 0.61 | 0.40 |
| | | Volatile content at 150°C | % by mass | 0.11 | 0.03 | 0.02 | 0.02 | 0.19 | 0.03 | 0.02 | 0.01 | 0.23 | 0.06 | 0.03 | 0.01 |
| Evaluation of hot melt adhesive composition | Adhesiveness | Peel strength at 20°C | g/25mm | 560 | 620 | 890 | 980 | 1,020 | 1,060 | 1,450 | 1,500 | 420 | 540 | 760 | 810 |
| | | Peel strength at 50°C | g/25mm | 410 | 550 | 750 | 860 | 940 | 1,010 | 1,300 | 1,320 | 250 | 340 | 630 | 650 |
| | | Peel strength at 80°C | g/25mm | 80 | 150 | 410 | 500 | 580 | 660 | 1,010 | 1,060 | 50 | 120 | 350 | 390 |
| | Odor | Evaluation of odor | - | 1,010 | 360 | 270 | 280 | 1,300 | 530 | 300 | 320 | 1,150 | 800 | 330 | 310 |

The copolymers obtained in Examples 1 to 4, 9 and 10 all have a softening point of 110°C or more and thus are excellent in heat resistance. The adhesive compositions of Examples 5 to 8, 11 and 12 respectively containing the copolymers obtained in Examples 1 to 4, 9 and 10 have a high balance of peel strength at 20°C with respect to the melt viscosities of the copolymers as compared to the adhesive compositions of Comparative Examples 5 to 8, 11 and 12 respectively containing the copolymers obtained in Comparative Examples 1 to 4, 9 and 10. The adhesive compositions of Examples 5 to 8, 11 and 12 respectively containing the copolymers obtained in Examples 1 to 4, 9 and 10 thus have an excellent adhesive strength. Similarly, the adhesive compositions of Examples 5 to 8, 11 and 12 have high peel strength at 50°C and 80°C with respect to the melt viscosity of the copolymer (C), and thus have an excellent high temperature adhesiveness. In addition, the copolymers (tackifiers) obtained in Examples 1 to 4, 9 and 10 have less volatile content at 150°C, and the adhesive compositions of Examples 5 to 8 containing one of the polymers are also advantageous due to their low odor.

### Industrial Applicability

The present invention provides a tackifier (B) capable of exhibiting excellent adhesivity, high temperature adhesiveness and heat resistance, and a hot melt adhesive composition using the same.

## Claims

1. A tackifier (B) containing a copolymer (C) that contains a structural unit derived from α-methylstyrene or isopropenyltoluene, and a structural unit derived from styrene, wherein the copolymer (C) satisfies requirements (i) to (iii) below:
(i) a content of the structural unit derived from α-methylstyrene or isopropenyltoluene is in a range of 30 to 70 mol%;
(ii) a softening point (Tm) measured by a ring and ball method in accordance with JIS K 2207 is in a range of 110 to 170°C; and
(iii) a content of a low molecular weight substance having a molecular weight of 350 or less in terms of polystyrene is less than 1.5% by mass, the molecular weight being measured by gel permeation chromatography (GPC) with polystyrene standards and tetrahydrofuran as solvent.

2. The tackifier (B) according to claim 1, wherein the copolymer (C) further satisfies a requirement (iv) below:
(iv) weight average molecular weight (Mw) measured by the gel permeation chromatography (GPC) is in a range of 1,000 to 5,000, and dispersion (Mw/Mn) is 1.9 or less, the dispersion being a ratio of the weight average molecular weight (Mw) to number average molecular weight (Mn).

3. A hot melt adhesive composition comprising 100 parts by mass of a base polymer (A) and 10 to 300 parts by mass of the tackifier (B) according to claim 1 or 2.

4. The hot melt adhesive composition according to claim 3, wherein the base polymer (A) is a copolymer and/or a hydrogenated product thereof, the copolymer containing a structural unit derived from a vinyl aromatic compound and a structural unit derived from a conjugated diene compound.

## Patentansprüche

1. Klebrigmacher (B), enthaltend ein Copolymer (C), das eine von α-Methylstyrol oder Isopropenyltoluol abgeleitete Struktureinheit und eine von Styrol abgeleitete Struktureinheit enthält, wobei das Copolymer (C) die nachstehenden Anforderungen (i) bis (iii) erfüllt:
(i) ein Gehalt der von α-Methylstyrol oder Isopropenyltoluol abgeleiteten Struktureinheit liegt im Bereich von 30 bis 70 Mol-%;
(ii) ein Erweichungspunkt (Tm), gemessen durch ein Ring- und Kugelverfahren gemäß JIS K 2207, liegt im Bereich von 110 bis 170°C; und
(iii) ein Gehalt an einer niedermolekularen Substanz mit einem Molekulargewicht von 350 oder weniger beträgt, bezogen auf Polystyrol, weniger als 1,5 Massen-%, wobei das Molekulargewicht durch Gelpermeationschromatographie (GPC) mit Polystyrolstandards und Tetrahydrofuran als Lösungsmittel gemessen wird.

2. Klebrigmacher (B) gemäß Anspruch 1, wobei das Copolymer (C) ferner die nachstehende Anforderung (iv) erfüllt:
(iv) das gewichtsmittlere Molekulargewicht (Mw), gemessen durch Gelpermeationschromatographie (GPC), liegt im Bereich von 1.000 bis 5.000, und die Dispersion (Mw/Mn) beträgt 1,9 oder weniger, wobei die Dispersion ein Verhältnis von dem gewichtsmittleren Molekulargewicht (Mw) zu dem zahlenmittleren Molekulargewicht (Mn) ist.

3. Schmelzklebstoffzusammensetzung, umfassend 100 Massenteile eines Basispolymers (A) und 10 bis 300 Massenteile des Klebrigmachers (B) gemäß Anspruch 1 oder 2.

4. Schmelzklebstoffzusammensetzung gemäß Anspruch 3, wobei das Basispolymer (A) ein Copolymer und/oder ein hydriertes Produkt davon ist, wobei das Copolymer eine von einer aromatischen Vinylverbindung abgeleitete Struktureinheit und eine von einer konjugierten Dienverbindung abgeleitete Struktureinheit enthält.

## Revendications

1. Agent donnant du collant (B) contenant un copolymère (C) qui contient un motif structural dérivé de α-méthylstyrène ou d'isopropényltoluène, et un motif structural dérivé de styrène, dans lequel le copolymère (C) satisfait aux exigences (i) à (iii) ci-dessous :
(i) une teneur en le motif structural dérivé de α-méthylstyrène ou d'isopropényltoluène se situe dans une plage allant de 30 à 70 % en mole ;
(ii) un point de ramollissement (Tm) mesuré par un procédé bille et anneau conformément à la norme JIS K 2207 se situe dans une plage allant de 110 à 170 °C ; et
(iii) une teneur en substance de poids moléculaire faible présentant un poids moléculaire de 350 ou moins en termes de polystyrène est inférieure à 1,5 % en masse, le poids moléculaire étant mesuré par chromatographie sur gel (GPC) avec des normes de polystyrène et du tétrahydrofuranne en tant que solvant.

2. Agent donnant du collant (B) selon la revendication 1, dans lequel le copolymère (C) satisfait en outre à une exigence (iv) ci-dessous :
(iv) le poids moléculaire moyen en poids (Mw) mesuré par la chromatographie sur gel (GPC) se situe dans une plage allant de 1000 à 5000, et la dispersion (Mw/Mn) est de 1,9 ou moins, la dispersion étant un rapport du poids moléculaire moyen en poids (Mw) sur le poids moléculaire moyen en nombre (Mn).

3. Composition adhésive thermofusible comprenant 100 parts en masse d'un polymère de base (A) et 10 à 300 parts en masse de l'agent donnant du collant (B) selon la revendication 1 ou la revendication 2.

4. Composition adhésive thermofusible selon la revendication 3, dans laquelle le polymère de base (A) est un copolymère et/ou un produit hydrogéné de celui-ci, le copolymère contenant un motif structural dérivé d'un composé aromatique de vinyle et un motif structural dérivé d'un composé de diène conjugué.
